# FASCICULE DE BREVET EUROPEEN

(11) **EP 2 440 912 B1**
(45) Date de publication et mention de la délivrance du brevet: **13.12.2017**
(21) Numéro de dépôt: 10737969.5
(22) Date de dépôt: 08.06.2010
(51) Int. Cl.: G01N 27/84

(54) **BANC ET PROCÉDÉ DE CONTRÔLE PAR MAGNÉTOSCOPIE D'UN ARBRE DE TURBOMACHINE**
VORRICHTUNG UND VERFAHREN ZUR ÜBERPRÜFUNG DER WELLE EINES TURBINENMOTORS MITTELS MAGNETPULVERPRÜFUNG
EQUIPMENT AND METHOD FOR CHECKING THE SHAFT OF A TURBINE ENGINE BY MAGNETIC PARTICLE INSPECTION

(30) Priorité: 10.06.2009 FR 0902815
(43) Date de publication de la demande: 18.04.2012
(73) Titulaire: Snecma, 75015 Paris (FR)
(72) Inventeur: LAINAY, Guillaume, 77550 Moissy Cramayel Cedex (FR); LEMOAL, Jean-Claude, 77550 Moissy Cramayel Cedex (FR); THIERRY, Lionel, 77550 Moissy Cramayel Cedex (FR)
(74) Mandataire: Ramey, Daniel
(86) Numéro de dépôt international: PCT/FR2010/051138
(87) Numéro de publication internationale: WO 2010/142911

(56) Documents cités:
- EP-A1- 0 593 357
- EP-A1- 1 494 060
- FR-A1- 2 920 537
- GB-A- 2 413 854
- JP-A- 5 332 995

## Description

La présente invention concerne un banc et un procédé de contrôle par magnétoscopie d'une pièce tubulaire telle qu'un arbre de turbomachine.

Les documents JP 5 332995 et GB 2 413 854 A décrivent des moyens de contrôle par magnétoscopie d'une pièce tubulaire.

La magnétoscopie (MT) est une technique de contrôle non destructif (CND) permettant de détecter des défauts à la surface d'une pièce en matériau ferromagnétique ou à l'intérieur de ce matériau. Cette technique consiste à pulvériser un produit contenant des particules colorées ou des particules ferromagnétiques enrobées d'un pigment fluorescent sur la surface de la pièce à contrôler, puis à soumettre cette pièce à un champ magnétique tout en observant par endoscopie et sous éclairage en lumière blanche ou lumière ultraviolette la surface traitée avec le produit.

Lorsque les lignes de courant du champ magnétique rencontrent un défaut de la pièce, elles sont déviées, ce qui créé un champ de fuite à la surface de la pièce attirant les particules ferromagnétiques au droit du défaut, ces particules étant observables sous éclairage ultraviolet du fait de la présence du pigment fluorescent.

Les arbres de turbine basse-pression et de compresseur basse-pression d'une turbomachine doivent être contrôlés par magnétoscopie après leur fabrication pour détecter d'éventuels défauts métallurgiques tels que des inclusions ou des criques d'usinage, et pendant des opérations de maintenance pour détecter d'éventuelles criques de fonctionnement. Ces arbres sont tubulaires et leurs surfaces interne et externe doivent être contrôlées par magnétoscopie dans leur intégralité.

Dans la technique actuelle, l'observation sous éclairage ultraviolet de la surface cylindrique interne d'un arbre de turbomachine est réalisée au moyen d'une canne qui est destinée à être engagée dans l'arbre par une de ses extrémités, et qui porte à son extrémité distale une source de lumière ultraviolette ainsi qu'un miroir incliné de renvoi d'images vers une caméra CCD située à l'extrémité proximale de la canne.

Cette technologie présente de nombreux inconvénients. La canne est équipée de matériels relativement complexes et encombrants. La source de lumière ultraviolette est formée par des lampes au néon qui ne permettent pas d'éclairer de manière homogène la surface interne de l'arbre, et qui émettent une lumière dont la longueur d'onde est difficilement contrôlable, ce qui ne permet pas d'avoir de bonnes conditions d'observation. De plus, le miroir, du fait de ses dimensions et de sa forme, renvoie des images de petite taille, ce qui rend difficile la détection des défauts. Enfin, la canne est déplacée en translation à l'intérieur de l'arbre en même temps que celui-ci est entraîné en rotation autour de son axe, ce qui entraîne un balayage hélicoïdal de la surface interne de l'arbre par la tâche d'éclairage définie par les moyens d'endoscopie, et se traduit par une déformation des images enregistrées par la caméra. Il est en outre difficile d'obtenir dans ce cas un recouvrement suffisant des surfaces inspectées et de garantir que la totalité de la surface interne de l'arbre a été contrôlée.

L'invention a notamment pour but d'apporter une solution simple, efficace et économique à ces problèmes.

Elle propose à cet effet un banc de contrôle par magnétoscopie d'une pièce tubulaire, telle qu'un arbre de turbomachine, comprenant des moyens de support et de mise en rotation de la pièce, un outil de forme allongée portant des moyens d'endoscopie à éclairage ultraviolet pour l'éclairage de la surface interne de la pièce et l'observation de défauts éventuels de la pièce, et des moyens de support et de guidage en translation de l'outil pour son insertion à l'intérieur de la pièce, caractérisé en ce que l'outil comprend une pluralité de repères externes régulièrement répartis sur au moins une partie de sa longueur et définissant des pas réguliers d'avance en translation de l'outil le long de l'axe longitudinal de la pièce, les moyens de support et de guidage de l'outil comprenant des moyens d'indexage coopérant par encliquetage avec les repères de l'outil pour contrôler avec précision l'avance et la position de l'outil dans la pièce.

Selon l'invention, les repères externes de l'outil de support des moyens d'endoscopie permettent de déterminer avec précision la position de l'outil dans la pièce à contrôler et donc de la zone de la pièce en cours d'observation à l'aide des moyens d'endoscopie. Ces repères répartis le long de l'outil définissent des pas réguliers d'avance par incrément de l'outil en translation à l'intérieur de la pièce. L'outil est destiné à être calé dans une position axiale dans la pièce pendant que celle-ci est entraînée en rotation autour de son axe. Ceci permet de balayer une zone annulaire interne de la pièce avec la tâche d'éclairage des moyens d'endoscopie de l'outil. Une fois que cette zone annulaire est entièrement inspectée, l'outil est avancé ou reculé d'un pas dans la pièce pour inspecter une nouvelle zone annulaire qui chevauche au moins en partie la zone annulaire précitée. Ces opérations sont répétées afin de contrôler toute la surface interne de la pièce. L'outil selon l'invention est donc destiné à être déplacé pas à pas à l'intérieur de la pièce à contrôler. Le fait de ne pas tourner la pièce à contrôler en même temps que l'outil est déplacé limite les déformations des images captées par les moyens d'endoscopie de l'outil.

L'outil selon l'invention peut être manipulé à la main par une personne ou de manière automatisée. Les repères externes de l'outil peuvent être des repères annulaires s'étendant autour de l'axe longitudinal de l'outil. Ils sont formés par apposition de marques annulaires ou formation de gorges annulaires sur la surface externe de l'outil. La distance entre deux repères peut être de 1cm environ.

L'outil selon l'invention peut avoir une forme générale cylindrique, et est avantageusement tubulaire, les moyens d'endoscopie étant logés et s'étendant à l'intérieur de l'outil. Cela permet de protéger les moyens d'endoscopie et de limiter l'encombrement de l'outil. De plus, cet outil est rigide et empêche la flexion et les vibrations des moyens d'endoscopie en utilisation.

Ces moyens d'endoscopie peuvent comprendre des moyens de guidage de lumière ultraviolette et des moyens de transmission d'images, qui s'étendent depuis l'extrémité proximale de l'outil jusqu'à son extrémité distale, et dépasse axialement de cette extrémité distale.

Avantageusement, les moyens de transmission d'images comprennent a leur extrémité distale au moins un prisme. L'utilisation de ce prisme garantit une transmission d'images de bonne qualité.

Selon une autre caractéristique de l'invention, chaque pas d'avance de l'outil a une dimension égale ou inférieure au diamètre du champ d'observation des moyens d'endoscopie. De préférence, chaque pas a une dimension sensiblement égale à la moitié du diamètre du champ d'observation des moyens d'endoscopie.

Le banc selon l'invention peut comprendre des moyens de support et de guidage à chacune des extrémités de la pièce pour l'insertion de l'outil dans la pièce par l'une ou l'autre de ses extrémités.

Dans le cas où la pièce à contrôler a une longueur importante, l'outil est engagé dans la pièce par l'une de ses extrémités puis par l'autre de ses extrémités, de façon à inspecter la totalité de la surface interne de la pièce.

Les moyens de support et de guidage de l'outil comprennent des moyens d'indexage coopérant par encliquetage avec les repères externes de l'outil pour contrôler avec précision l'avance et la position de l'outil dans la pièce.

L'invention concerne enfin un procédé de contrôle non destructif par magnétoscopie d'une pièce tubulaire au moyen du banc tel que décrit ci-dessus, caractérisé en ce qu'il comprend les étapes consistant à :
a) insérer l'outil dans la pièce à contrôler par une de ses extrémités, jusqu'à ce qu'il ait une position souhaitée dans cette pièce, cette position étant définie par les moyens d'indexage du banc coopérant par encliquetage avec un des repères de l'outil,
b) immobiliser l'outil et tourner la pièce autour de son axe pour inspecter une zone annulaire interne de la pièce à l'aide des moyens d'endoscopie de l'outil,
c) puis déplacer d'un pas dans une direction longitudinale l'outil à l'intérieur de la pièce, jusqu'à ce que les moyens d'indexage coopèrent par encliquetage avec un autre repère adjacent de l'outil, et
d) répéter les étapes b) et c), jusqu'à ce que la pièce ait été contrôlée sur une longueur souhaitée.

Le procédé consiste également à répéter les étapes a), b), c) et d) en insérant l'outil dans l'autre extrémité de la pièce.

Le procédé selon l'invention peut en outre consister à contrôler chaque pièce deux fois, la pièce étant soumise à un champ magnétique longitudinal lors du premier contrôle et à un champ magnétique transversal lors du second contrôle.

La détection des défauts de la pièce est optimale lorsque les lignes de champ du champ magnétique sont perpendiculaires à ces défauts. L'application d'un champ magnétique longitudinal à la pièce permet de détecter les défauts de cette pièce ayant une orientation sensiblement circonférentielle alors que l'application d'un champ magnétique transversal à la pièce permet de détecter les défauts de cette pièce ayant une orientation sensiblement axiale.

L'invention sera mieux comprise et d'autres détails, caractéristiques et avantages de la présente invention apparaîtront plus clairement à la lecture de la description suivante faite à titre d'exemples non limitatifs et en référence aux dessins annexés, dans lesquels :
- les figures 1 et 2 sont des vues schématiques d'un banc de contrôle non destructif par magnétoscopie selon l'invention, et représentent deux étapes du procédé de contrôle selon l'invention, et
- les figures 3 et 4 sont des vues schématiques partielles en perspective de l'outil selon l'invention pour le contrôle par magnétoscopie d'une pièce tubulaire.

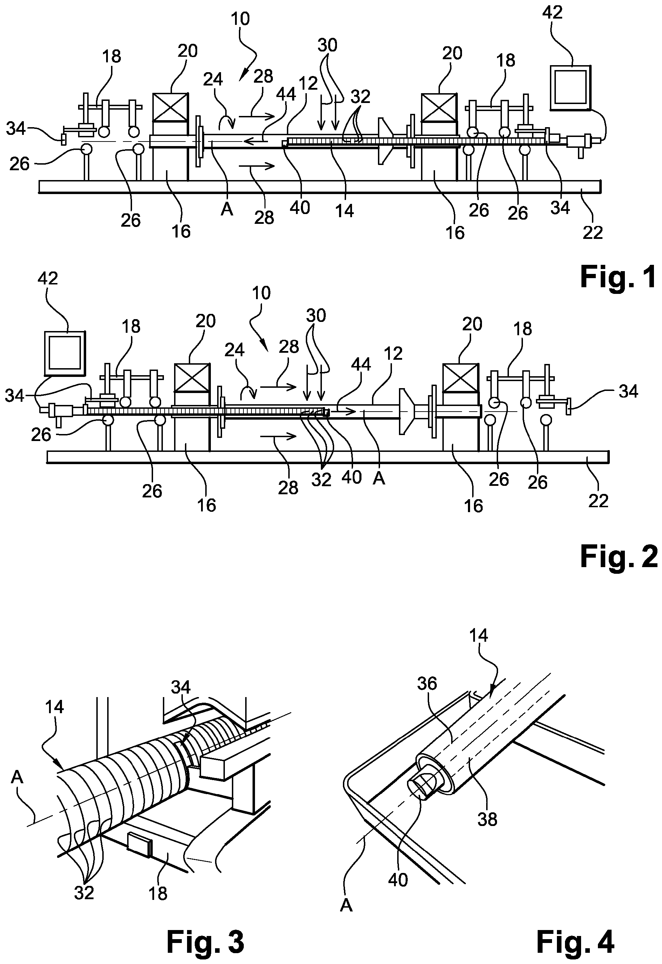

On se réfère d'abord à la figure 1 qui représente un banc 10 de contrôle non destructif (CND) par magnétoscopie d'une pièce tubulaire qui est dans l'exemple représenté un arbre 12 de turbomachine, et en particulier un arbre de turbine basse-pression ou de compresseur basse-pression de turbomachine.

Cet arbre 12 a une forme générale cylindrique et allongée d'axe longitudinal A et est réalisé dans un matériau ferromagnétique. Les surfaces cylindriques interne et externe de l'arbre 12 doivent être contrôlées par magnétoscopie après la fabrication de cet arbre ou au cours d'opérations de maintenance de la turbomachine, pour détecter la présence d'éventuels défauts dans le matériau ferromagnétique de l'arbre.

Le contrôle par magnétoscopie de la surface interne de l'arbre 12 est essentiellement réalisé en deux étapes : une première étape dans laquelle un produit contenant des particules ferromagnétiques enrobées d'un pigment fluorescent est pulvérisé sur la surface interne de l'arbre, et une seconde étape dans laquelle l'arbre est soumis à un champ magnétique et un outil 14 portant des moyens d'endoscopie est engagé à l'intérieur de l'arbre pour l'inspection visuelle sous éclairage ultraviolet de sa surface interne traitée avec le produit précité.

Le banc de contrôle 10 comprend des moyens 16 de support et de mise en rotation de l'arbre 12 autour de son axe A, un outil 14 de contrôle non destructif par magnétoscopie du type précité, des moyens 18 de support et de guidage en translation de cet outil à l'intérieur de l'arbre 12, et des générateurs 20 de champ magnétique.

L'arbre 12 est maintenu à chacune de ses extrémités par les moyens de support 16 qui sont fixés au sol 22. Ces moyens de support 16 permettent de tourner l'arbre 12 en rotation autour de son axe A (flèche 24).

Des moyens de support de l'outil 14 sont disposés au niveau de chaque extrémité de l'arbre 12 de façon à ce que l'outil puisse être engagé et guidé dans l'une ou l'autre des extrémités de l'arbre, comme cela est visible aux figures 1 et 2. Ces moyens de support 18 comprennent par exemple des galets 26 de guidage de l'outil en translation axiale à l'intérieur de l'arbre dans un plan horizontal.

Les générateurs 20 de champ magnétique sont aptes à appliquer un champ magnétique à l'arbre 12 dans une direction longitudinale (flèches 28) et/ou dans une direction transversale (flèches 30).

L'outil 14 selon l'invention comprend des moyens d'endoscopie logés à l'intérieur d'un corps cylindrique tubulaire sur la surface externe duquel sont formés des repères 32 définissant des pas réguliers d'avance en translation de l'outil le long de l'axe A de l'arbre.

Dans l'exemple représenté, ces repères 32 sont formés par des marques annulaires externes ou des rainures annulaires externes s'étendant autour de l'axe longitudinal de l'outil (figures 1 à 3). Ces repères 32 sont formés sur une majeure partie de la longueur du corps de l'outil.

Les moyens 18 de support de l'outil 14 sont équipés de moyens d'indexage 34 coopérant avec les repères 32 de l'outil pour contrôler et déterminer avec précision la position axiale de l'outil dans l'arbre 12. Dans l'exemple représenté en figure 3, ces moyens d'indexage du type à billes par exemple coopèrent par encliquetage avec les rainures annulaires 32 de l'outil pour le bloquer dans une position axiale vis-à-vis de l'arbre 12.

Les moyens d'endoscopie portés par l'outil 14 comprennent des moyens 36 de transmission d'images et des moyens 38 de guidage de lumière ultraviolette, qui s'étendent axialement dans le corps de l'outil.

Les moyens 36 de transmission d'images dépassent axialement de l'extrémité distale du corps de l'outil (figure 4) et comprennent à cette extrémité au moins un prisme 40 de renvoi d'images vers une série de lentilles ou analogues logées dans le corps de l'outil. Les images sont par exemple captées par une caméra située à l'extrémité proximale de l'outil pour être ensuite visualisées sur un écran de contrôle. En variante, les moyens 36 de transmission d'images comprennent à leur extrémité proximale un oculaire.

Les moyens 38 de guidage de lumière sont reliés à l'extrémité proximale de l'outil à une source de lumière ultraviolette et dépassent axialement à leur extrémité opposée de l'extrémité distale du corps de l'outil.

Les moyens d'endoscopie sont du type à visée distale déviée, c'est-à-dire que l'axe d'observation défini par le prisme des moyens 36 de transmission d'images est orienté latéralement, sensiblement perpendiculairement à l'axe longitudinal de l'outil, et l'axe de visée défini par l'extrémité distale des moyens 38 de guidage de lumière est sensiblement parallèle à cet axe de visée.

Les moyens 36, 38 de transmission d'images et de guidage de lumière sont en outre reliés à leurs extrémités proximales à une unité 42 de commande et de traitement de données.

La tâche d'éclairage définie par les moyens d'éclairage des moyens d'endoscopie a une forme générale circulaire. L'outil 14 est destiné à être engagé dans l'arbre par une de ses extrémités (figure 1) et à être bloqué dans une position axiale donnée dans l'arbre à l'aide des moyens d'indexage 34. L'outil est maintenu fixement par les moyens de support 18 et l'arbre 12 est tourné autour de son axe A par les moyens de support 16 (flèche 24), de façon à ce que la tâche d'éclairage des moyens d'endoscopie de l'outil balaye une surface annulaire interne de l'outil. L'outil est ensuite déplacé en translation d'un pas en avant ou en arrière dans l'arbre (flèche 42) puis est à nouveau immobilisé par les moyens d'indexage 34 des moyens de support 18. La rotation de l'arbre 12 entraîne le balayage par la tâche d'éclairage des moyens d'endoscopie d'une nouvelle surface annulaire interne de l'arbre qui recouvre au moins en partie la surface annulaire précédemment inspectée. L'outil 14 est ainsi avancé ou reculé pas à pas à l'intérieur de l'arbre et maintenu fixement après chacun de ces déplacements et pendant la rotation de l'arbre 12.

Dans le cas où chaque pas d'avance de l'outil a une dimension sensiblement égale à la moitié du diamètre de la tâche d'éclairage des moyens d'endoscopie, chaque surface annulaire inspectée par la tâche d'éclairage recouvre une moitié de chacune des surfaces annulaires inspectées adjacentes, ce qui permet d'inspecter en totalité deux fois la surface interne de l'arbre.

Dans le cas où l'arbre 12 à contrôler a une longueur importante et sa surface interne ne peut être contrôlée en totalité par engagement de l'outil via une seule de ses extrémités, l'outil est engagé une première fois dans l'arbre par une de ses extrémités pour contrôler une première moitié de sa surface interne (figure 1) et est ensuite engagée une nouvelle fois dans l'arbre par son autre extrémité pour contrôler la seconde moitié de sa surface interne (figure 2).

Les étapes précitées du procédé selon l'invention représentées aux figures 1 et 2 sont réalisées en soumettant l'arbre à un champ magnétique en direction longitudinale (flèches 28) pour détecter les défauts à orientation sensiblement circonférentielle de l'arbre, puis ces étapes sont répétées en soumettant l'arbre à un champ magnétique en direction transversale (flèches 30) pour détecter les défauts à orientation sensiblement axiale de l'arbre.

Le déplacement de l'outil 14 et la rotation de l'arbre 12 peuvent être assurés manuellement ou de manière automatisée.

L'arbre 12 peut avoir une longueur de 1,8 à 2 mètres environ et l'outil 14 peut avoir une longueur de 1,8 mètres environ. Cet outil 14 peut avoir en section une forme circulaire, carrée, polygonale ou quelconque. La dimension des pas définis par les repères externes 32 de l'outil peut être de 10mm environ.

## Revendications

1. Banc (10) de contrôle par magnétoscopie d'une pièce (12) tubulaire, telle qu'un arbre de turbomachine, comprenant des moyens (16) de support et de mise en rotation de la pièce, un outil (14) de forme allongée portant des moyens d'endoscopie à éclairage ultraviolet pour l'éclairage de la surface interne de la pièce et l'observation de défauts éventuels de la pièce, et des moyens (18) de support et de guidage en translation de l'outil (14) pour son insertion à l'intérieur de la pièce, **caractérisé en ce que** l'outil comprend une pluralité de repères (32) externes régulièrement répartis sur au moins une partie de sa longueur et définissant des pas réguliers d'avance en translation de l'outil le long de l'axe longitudinal de la pièce, les moyens (18) de support et de guidage de l'outil comprenant des moyens d'indexage (34) coopérant par encliquetage avec les repères (32) de l'outil (14) pour contrôler avec précision l'avance et la position de l'outil dans la pièce (12).

2. Banc selon la revendication 1, **caractérisé en ce que** l'outil (14) comprend une pluralité de repères annulaires (32) s'étendant autour de l'axe longitudinal de l'outil.

3. Banc selon la revendication 2, **caractérisé en ce que** les repères annulaires (32) sont formés par apposition de marques annulaires ou formation de gorges annulaires sur la surface externe de l'outil.

4. Banc selon l'une des revendications précédentes, **caractérisé en ce que** l'outil (14) a une forme générale cylindrique.

5. Banc selon l'une des revendications précédentes, **caractérisé en ce que** l'outil (14) est tubulaire et les moyens d'endoscopie s'étendent à l'intérieur de l'outil.

6. Banc selon l'une des revendications précédentes, **caractérisé en ce que** les moyens d'endoscopie comprennent des moyens (38) de guidage de lumière ultraviolette et des moyens (36) de transmission d'images, qui s'étendent depuis l'extrémité proximale de l'outil jusqu'à son extrémité distale, et dépassent axialement de cette extrémité distale.

7. Banc selon la revendication 6, **caractérisé en ce que** les moyens (36) de transmission d'images comprennent à leur extrémité distale au moins un prisme (40).

8. Banc selon l'une des revendications précédentes, **caractérisé en ce que** chaque pas d'avance a une dimension égale ou inférieure au diamètre du champ d'observation des moyens d'endoscopie.

9. Banc selon l'une des revendications précédentes, **caractérisé en ce que** chaque pas d'avance a une dimension égale à la moitié du diamètre du champ d'observation des moyens d'endoscopie.

10. Banc selon l'une des revendications précédentes, **caractérisé en ce qu'**il comprend des moyens (18) de support et de guidage de l'outil à chacune des extrémités de la pièce (12) pour l'insertion de l'outil dans la pièce par l'une ou l'autre de ses extrémités.

11. Procédé de contrôle par magnétoscopie d'une pièce (12) tubulaire au moyen du banc (10) selon l'une des revendications précédentes, **caractérisé en ce qu'**il comprend les étapes consistant à :
a) insérer l'outil (14) dans la pièce par une de ses extrémités, jusqu'à ce qu'il ait une position souhaitée dans cette pièce, cette position étant définie par les moyens d'indexage du banc coopérant par encliquetage avec un des repères de l'outil,
b) immobilier l'outil et tourner la pièce autour de son axe (A) pour inspecter une zone annulaire interne de la pièce à l'aide des moyens d'endoscopie de l'outil,
c) puis déplacer d'un pas dans une direction longitudinale l'outil à l'intérieur de la pièce, jusqu'à ce que les moyens d'indexage coopèrent par encliquetage avec un autre repère adjacent de l'outil, et
d) répéter les étapes b) et c), jusqu'à ce que l'intérieur de la pièce ait été contrôlé sur une longueur souhaitée.

12. Procédé selon la revendication 11, **caractérisé en ce qu'**il consiste à répéter les étapes a), b), c) et d) en insérant l'outil (14) dans l'autre extrémité de la pièce (12).

13. Procédé selon l'une des revendications 11 ou 12, **caractérisé en ce qu'**il consiste à contrôler chaque pièce (12) deux fois, la pièce étant soumise à un champ magnétique longitudinal lors d'un premier contrôle, et à un champ magnétique transversal lors d'un second contrôle.

## Patentansprüche

1. Prüfstand (10) zum Prüfen eines rohrförmigen Bauteils (12), wie etwa einer Turbotriebwerkswelle, mittels Magnetpulverprüfung, enthaltend Mittel (16) zum Haltern und Drehen des Bauteils, ein Werkzeug (14) länglicher Form, das Mittel zur Endoskopie mit UV-Licht zur Ausleuchtung der Innenfläche des Bauteils und zur Erkennung von eventuellen Mängeln des Bauteils trägt, sowie Mittel (18) zum Haltern und translatorischen Führen des Werkzeugs (14) zu dessen Einführung ins Innere des Bauteils, **dadurch gekennzeichnet, dass** das Werkzeug eine Mehrzahl von äußeren Bezugspunkten (32) aufweist, die gleichmäßig über zumindest einen Teil seiner Länge verteilt sind und gleichmäßige Vorrückschritte zur translatorischen Verschiebung des Werkzeugs entlang der Längsachse des Bauteils definieren, wobei die Mittel (18) zum Haltern und Führen des Werkzeugs Indexierungsmittel (34) aufweisen, die durch Einschnappen mit den Bezugspunkten (32) des Werkzeugs (14) zusammenwirken, um die Verschiebung und Position des Werkzeugs in dem Bauteil (12) mit Präzision zu überprüfen.

2. Prüfstand nach Anspruch 1, **dadurch gekennzeichnet, dass** das Werkzeug (14) eine Mehrzahl von ringförmigen Bezugspunkten (32) aufweist, die sich um die Längsachse des Werkzeugs herum erstrecken.

3. Prüfstand nach Anspruch 2, **dadurch gekennzeichnet, dass** die ringförmigen Bezugspunkte (32) durch Anbringen von ringförmigen Markierungen oder durch Ausbilden von ringförmigen Nuten an der Außenfläche des Werkzeugs ausgebildet sind.

4. Prüfstand nach einem der vorangehenden Ansprüche, **dadurch gekennzeichnet, dass** das Werkzeug (14) eine zylindrische Form hat.

5. Prüfstand nach einem der vorangehenden Ansprüche, **dadurch gekennzeichnet, dass** das Werkzeug (14) rohrförmig ist und die Endoskopiemittel sich innerhalb des Werkzeugs erstrecken.

6. Prüfstand nach einem der vorangehenden Ansprüche, **dadurch gekennzeichnet, dass** die Endoskopiemittel Führungsmittel (38) zum Führen von UV-Licht und Übertragungsmittel (36) zum Übertragen von Bildern aufweisen, die sich von dem proximalen Ende des Werkzeugs bis zu dem distalen Ende erstrecken und axial von diesem distalen Ende hervorstehen.

7. Prüfstand nach Anspruch 6, **dadurch gekennzeichnet, dass** die Bildübertragungsmittel (36) an ihrem distalen Ende zumindest ein Prisma (40) enthalten.

8. Prüfstand nach einem der vorangehenden Ansprüche, **dadurch gekennzeichnet, dass** jeder Vorrückschritt eine Abmessung gleich bzw. geringer als der Durchmesser des Beobachtungsfeldes der Endoskopiemittel hat.

9. Prüfstand nach einem der vorangehenden Ansprüche, **dadurch gekennzeichnet, dass** jeder Vorrückschritt eine Abmessung gleich dem halben Durchmesser des Beobachtungsfeldes der Endoskopiemittel hat.

10. Prüfstand nach einem der vorangehenden Ansprüche, **dadurch gekennzeichnet, dass** er Mittel (18) zum Haltern und Führen des Werkzeugs an jedem der Enden des Bauteils (12) zum Einführen des Werkzeugs in das Bauteil über das eine oder andere seiner Enden aufweist.

11. Verfahren zum Prüfen eines rohrförmigen Bauteils (12) mittels Magnetpulverprüfung mit einem Prüfstand (10) nach einem der vorangehenden Ansprüche, **dadurch gekennzeichnet, dass** es die nachfolgenden Schritte umfasst:
a) Einführen des Werkzeugs (14) in das Bauteil über eines seiner Enden soweit, bis es eine gewünschte Position in diesem Bauteil hat, wobei diese Position von den Indexierungsmitteln des Prüfstands definiert wird, die durch Einschnappen mit einem der Bezugspunkte des Werkzeugs zusammenwirken,
b) Festlegen des Werkzeugs und Drehen des Bauteils um seine Achse (A), um einen ringförmigen Innenbereich des Bauteils mit Hilfe der Endoskopiemittel des Werkzeugs zu untersuchen,
c) dann Verlagern des Werkzeugs um einen Schritt in Längsrichtung innerhalb des Bauteils soweit, bis die Indexierungsmittel durch Einschnappen mit einem weiteren, benachbarten Bezugspunkt des Werkzeugs zusammenwirken, und
d) Wiederholen der Schritte b) und c) bis das Innere des Bauteils über eine gewünschte Länge geprüft wurde.

12. Verfahren nach Anspruch 11, **dadurch gekennzeichnet, dass** es darin besteht, die Schritte a), b), c) und d) zu wiederholen, indem das Werkzeug (14) in das andere Ende des Bauteils (12) eingeführt wird.

13. Verfahren nach einem der Ansprüche 11 oder 12, **dadurch gekennzeichnet, dass** es darin besteht, jedes Bauteil (12) zweimal zu prüfen, wobei das Bauteil bei einer ersten Prüfung einem longitudinalen Magnetfeld und bei einer zweiten Prüfung einem transversalen Magnetfeld unterzogen wird.

## Claims

1. A bench (10) for magnetoscopic controlling of a tubular part (12) such as a turbine engine shaft, the bench comprising means (16) for supporting and for rotating the part, a tool (14) of elongate shape carrying endoscopic means for ultraviolet lighting of the inside surface of the part and for observing any defects in the part, and means (18) for supporting and guiding the tool (14) to move in translation so as to be inserted inside the part, **characterized in that** the tool includes a plurality of external references (32) that are regularly distributed over at least a fraction of its length and defining regular pitches for advancing the tool in translation along the longitudinal axis of the part, the means (18) for supporting and guiding the tool including indexing means (34)co-operating with the references (32) of the tool (14) by clipping in order to control accurately the advance and the position of the tool in the part (12).

2. A bench according to claim 1, **characterized in that** the tool (14) has a plurality of annular references (32) extending around the longitudinal axis of the tool.

3. A bench according to claim 2, wherein the annular references (32) are formed by applying annular marks or by forming annular grooves to the outer surface of the tool.

4. A bench according to any preceding claim, **characterized in that** the tool (14) is generally cylindrical in shape.

5. A bench according to any preceding claim, **characterized in that** the tool (14) is tubular and the endoscopic means extend inside the tool.

6. A bench according to any preceding claim, **characterized in that** the endoscopic means comprise ultraviolet light guide means (38) and image transmission means (36), which extend from the proximal end of the tool to its distal end, and exceed axially from said distal end.

7. A bench according to claim 6, **characterized in that** the image transmission means (36) include at least one prism (40) at their distal end.

8. A bench according to any preceding claim, **characterized in that** each advance pitch is of a size that is equal to or less than the diameter of the field of observation of the endoscopic means.

9. A bench according to any preceding claim, **characterized in that** each advance pitch is of a size equal to half the diameter of the field of observation of the endoscopic means.

10. A bench according to any preceding claim, **characterized in that** it includes means (18) for supporting and guiding the tool at each of the ends of the part (12) in order to insert the tool into the part via one or the other of its ends.

11. A method for magnetoscopically controlling a tubular part (12) by means of a bench (10) according to any preceding claim, the method being **characterized in that** it comprises the steps consisting in:
a) inserting the tool (14) in the part via one of its ends until it occupies a desired position in said part, said position being defined by indexing means of the bench co-operating by clipping with one of the references of the tool;
b) holding the tool stationary and rotating the part about its axis (A) in order to inspect an annular zone inside the part with the help of the endoscopic means of the tool;
c) then moving the tool inside the part through one pitch in a longitudinal direction until the indexing means co-operate by clipping with an adjacent reference of the tool; and
d) repeating steps b) and c) until the inside of the part has been inspected over a desired length.

12. A method according to claim 11, **characterized in that** it consists in repeating steps a), b), c), and d) by inserting the tool (14) into the other end of the part (12) .

13. A method according to claim 11 or claim 12, **characterized in that** it consists in inspecting each part (12) twice, the part being subjected to a longitudinal magnetic field during a first inspection and to a transverse magnetic field during a second inspection.
